Europäisches Patentamt

**European Patent Office**

**Office européen des brevets**

(19)

(11) Veröffentlichungsnummer: **0 154 900**
**B1**

(12) **EUROPÄISCHE PATENTSCHRIFT**

(45) Veröffentlichungstag der Patentschrift:
**27.01.88**

(21) Anmeldenummer: **85102242.6**

(22) Anmeldetag: **28.02.85**

(51) Int. Cl.⁴: **A 61 C 17/02**, A 61 C 3/02

(54) **Düsenkopf für den Handgriff eines Dentalgerätes.**

(30) Priorität: **08.03.84 DE 8407156 U**

(43) Veröffentlichungstag der Anmeldung:
**18.09.85 Patentblatt 85/38**

(45) Bekanntmachung des Hinweises auf die Patenterteilung:
**27.01.88 Patentblatt 88/4**

(84) Benannte Vertragsstaaten:
**AT BE CH DE FR GB IT LI LU NL SE**

(56) Entgegenhaltungen:
**DE - A - 1 416 921**
**DE - A - 2 930 836**
**DE - U - 7 226 159**
**GB - A - 1 117 000**
**US - A - 1 779 850**

(73) Patentinhaber: **EMS S.A. Electro Medical Systems, G.-H. Piguet 17, CH-1347 Le Sentier (CH)**

(72) Erfinder: **Mabille, Pierre, G.-H. Piguet 1, CH-1347 Le Sentier (CH)**

(74) Vertreter: **Gauger, Hans-Peter, Dipl.-Ing. et al, Patentanwälte Dipl.-Ing.Hans-Jürgen Müller Dipl.-Chem.Dr.Gerhard Schupfner Dipl.-Ing.Hans-Peter Gauger Lucile-Grahn-Strasse 38, D-8000 München 80 (DE)**

**Beschreibung**

Die Erfindung bezieht sich auf einen Düsenkopf für den Handgriff eines der Zahnreinigung dienenden Dentalgerätes der durch den Patentanspruch 1 angegebenen Gattung.

Bei einem aus der DE-A-2 930 836 bekannten Düsenkopf dieser Art sind die beiden Teile des Düsenhalters über zwei achsparallele Verbindungsrohre starr miteinander verbunden, die eine Anschlussverbindung zwischen den in dem einen Düsenhalterteil achsparallel ausgebildeten Anschlussbohrungen für zwei zu dem Dentalgerät führende Anschlussschläuche und den in dem zweiten Düsenhalterteil koaxial angeordneten Austrittsrohren für Schleifstoff im Gemisch mit Luft und für Wasser in der Zuleitung aus dem Dentalgerät ergeben. Die beiden Verbindungsrohre sind dabei an diesem zweiten Düsenhalterteil in zwei achsparallele Zentrierbohrungen eingefügt, welche die den beiden Austrittsrohren gemeinsame Achse rechtwinklig derart kreuzen, dass die Zuleitung des Gemisches aus Schleifstoff und Luft in das Innenrohr stromauf von der Zuleitung des Wassers in den Ringspalt zwischen dem Innenrohr und dem Aussenrohr erfolgt, bezüglich dessen Mündung die Mündung des Innenrohres im übrigen etwas axial zurückversetzt ist, um so durch das an der Mündung des Aussenrohres austretende Wasser eine Saugwirkung an der Mündung des Innenrohres zu erzeugen, die deren Verstopfen durch den im Gemisch mit Luft durch das Innenrohr herangeführten Schleifstoff verhindern soll. An diesem bekannten Düsenkopf ist nachteilig, dass die Vielzahl seiner einzelnen Bauteile sowohl hinsichtlich der Herstellung als auch hinsichtlich des Zusammenbaus sehr kostenaufwendig ist und bezüglich der Zuleitung des Schleifstoffs im Gemisch mit Luft ständig die Gefahr eines Verstopfens nicht nur an der Mündung des Innenrohres, sondern vor allem auch an dessen Anschlussende an das zugeordnete Verbindungsrohr zwischen den beiden Düsenhalterteilen besteht, die als Folge der dort vorgenommenen Umlenkung des Schleifstoffstrahls auftritt.

Die durch die Patentansprüche gekennzeichnete Erfindung löst die Aufgabe, einen Düsenkopf der angegebenen Gattung derart auszubilden, dass für die getrennt zu einem Dentalgerät erfolgende Zuleitung von Schleifstoff im Gemisch mit Luft und von Wasser hin zu den Mündungen der beiden Rohre des Düsenhalters mit einer weniger aufwendigen Konstruktion ein störungsfreier Strömungsweg erhalten wird.

Die durch die Erfindung erreichten Vorteile liegen im wesentlichen darin, dass durch die unmittelbare bauliche Vereinigung der beiden Düsenhalterteile nicht nur die Material- und Fertigungskosten des gesamten Düsenkopfes erheblich verringert werden können, sondern damit auch ein völlig störungsfreier Strömungsweg für den insoweit besonders kritischen Schleifstoffstrahl erhalten wird. Ein weiterer Vorteil ist darin erkennbar, dass der Düsenaustritt aus der unmittelbaren Sichtverbindung mit dem Düsenhalter herausgelöst ist, für das der behandelnde Zahnarzt mit einer entsprechenden Manipulation des Handgriffes jetzt den mit Wasser umhüllten Schleifstoffstrahl gezielter gegen die zu reinigenden Zahnoberfläche ausrichten kann.

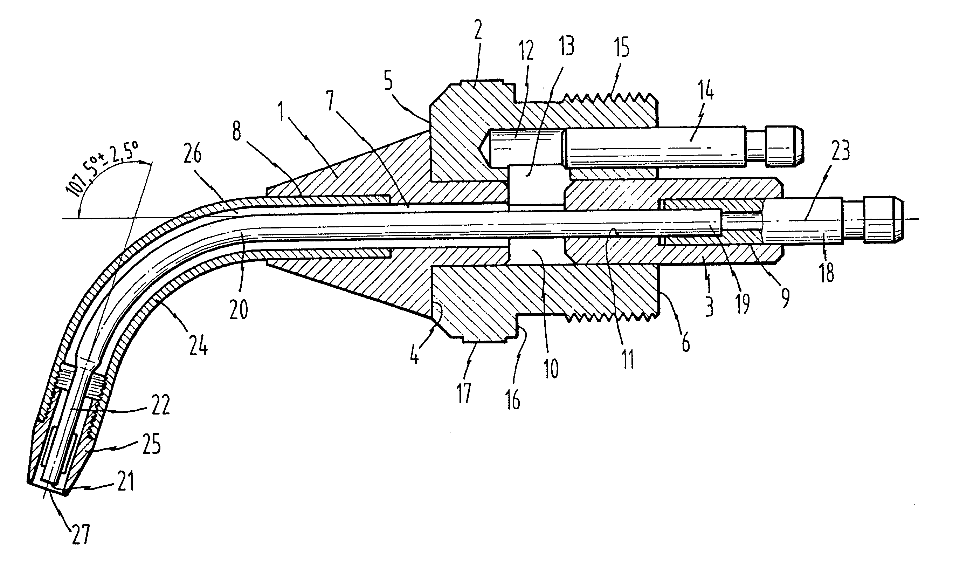

Eine bevorzugte Ausführungsform des erfindungsgemässen Düsenkopfes ist in der Zeichnung mit einem Längsschnitt schematisch dargestellt.

Der für den Handgriff eines der Zahnreinigung dienenden Dentalgerätes einer Ausführungsform beispielsweise gemäss der EP-A-0 097 288 vorgesehene Düsenkopf umfasst einen Düsenhalter, der aus zwei Teilen 1 und 2 besteht. Der eine Düsenhalterteil 1 ist über einen an ihm einstückig ausgebildeten Zentrierzapfen 3 in eine Mittelbohrung des zweiten Düsenhalterteils 2 abgedichtet eingefügt. Die beiden Düsenhalterteile 1, 2 sind mithin längs einer gemeinsamen Achse ineinander zentriert und befinden sich über eine an dem einen Düsenhalterteil 1 ausgebildete Anschlagschulter 4 und die Stirnfläche 5 des zweiten Düsenhalterteils 2 in einer axialen Anschlagstellung. Der Zentrierzapfen 3 weist eine gegenüber dem Düsenhalterteil 2 grössere Axiallänge auf, so dass er über dessen hintere Stirnfläche 6 axial vorsteht. Die beiden Düsenhalterteile 1, 2 sind über eine Klebeverbindung oder alternativ über eine Schweissverbindung drehfest miteinander verbunden.

Der Düsenhalterteil 1 weist eine durchgehende Axialbohrung 7 auf, die am vorderen Ende zu einer ersten Zentrierbohrung 8 im Durchmesser vergrössert ist. Das hintere Ende der Axialbohrung 7 ist als eine zweite Zentrierbohrung 9 ausgebildet. Axial zwischen den beiden Zentrierbohrungen 8, 9 ist eine rechtwinklig zu der Axialbohrung 7 verlaufende Querbohrung 10 ausgebildet, die durch den Düsenhalterteil 2 abgedichtet wird. Zwischen der Querbohrung 10 und der Zentrierbohrung 9 ist eine Teillänge 11 der Axialbohrung 7 mit einem kleineren Bohrdurchmesser versehen, so dass ausgehend von diesem kleineren Bohrdurchmesser der Düsenhalterteil 1 zuerst mit der Zentrierbohrung 9 und dann von der anderen Seite her zuerst mit der Axialbohrung 7 und dann anschliessend mit der Zentrierbohrung 8 gebohrt werden kann.

Der hohlzylindrisch ausgebildete zweite Düsenhalterteil 2 weist eine achsparallele und damit auch zu der Axialbohrung 7 parallele Sacklochbohrung 12 auf, die über eine quer zu ihrer Achse ausgerichtete Anschlussbohrung 13 an die Querbohrung 10 des Düsenhalterteils 1 angeschlossen ist. In die Sacklochbohrung 12 ist ein hohler Anschlussstopfen 14 eingesetzt, auf dessen über die Stirnfläche 6 axial vorstehendes Ende der in der Zeichnung nicht näher dargestellte Anschlussschlauch des Dentalgerätes aufgeschoben werden kann, über den dem Düsenkopf Wasser zugeleitet wird. Der Wasserschlauch erhält für diese Anschlussverbindung eine Durchleitung durch ein den Handgriff des Dentalgerätes bildendes Metallrohr, das mittels eines komplementär ausgebildeten Innengewindes an einem Aussengewinde 15 des Düsenhalterteils 2 mit dem Düsenkopf verschraubt werden kann. Das axiale Anziehen dieser Schraubverbindung wird dabei bis in eine Anschlagstellung des Metallrohres an einer Anschlagschulter 16 vorgenommen, die im Übergang zu einem am vorderen Ende des Düsenhalterteils 2 befindlichen Ringbund ausgebildet ist, dessen Umfangsfläche 17 für ein besseres Greifen des Düsenhalters gerändelt sein kann.

In die Zentrierbohrung 9 des Düsenhalterteils 1 ist ein zweiter hohler Anschlussstopfen 18 eingesetzt, der über den Anschlussstopfen 14 axial vorsteht und das Aufschieben eines zweiten Anschlussschlauches erlaubt, über welchen aus dem Dentalgerät ein der Zahnreinigung dienender Schleifstoff im Gemisch mit Luft an den Düsenkopf zugeleitet wird. Der Anschlussstopfen 18 ist mit einer Zentrierbohrung auf das eine Ende 19 eines Innenrohres 20 aufgeschoben, an dessen Durchmesser die Teillänge 11 der Axialbohrung 7 des Düsenhalterteils 1 angepasst ist, so dass durch die durch diese Teillänge 11 hindurchgesteckte Teillänge des Innenrohres 20 die Querbohrung 10 nach aussen abgedichtet wird. Das Innenrohr 20 weist an seinem anderen Ende eine Mündung 21 verringerten Durchmessers auf, die sich am Ende einer über den Düsenhalter vorstehenden, gekrümmten Teillänge des Innenrohres 20 befindet. Der Krümmungsverlauf dieser Teillänge ist dabei so gewählt, dass für die Mittelachse 22 des Düsenaustritts und die Zentrierachse 23 der beiden Düsenhalterteile 1, 2 ein gemeinsamer Mittelpunktswinkel von beispielsweise etwa 107,5° ∓ 2,5° erhalten wird.

Koaxial zu dem Innenrohr 20 ist ein Aussenrohr 24 angeordnet, das mit seinem einen Ende in der Zentrierbohrung 8 des Düsenhalterteils 1 befestigt ist. Mit dem anderen Ende dieses Aussenrohres 24 ist eine Ringdüse 25 verschraubt, durch welche die Mündung 21 des Innenrohres zentriert ist. Das Aussenrohr 24 ist mit seiner über den Düsenhalter vorstehenden Teillänge dem gekrümmten Verlauf des Innenrohres 20 angepasst und so dimensioniert, dass zwischen den beiden Rohren ein Ringspalt 26 ausgebildet ist, der über die Axialbohrung 7 und die Querbohrung 10 sowie die Anschlussbohrung 13 eine Anschlussverbindung an die Sacklochbohrung 12 aufweist und in einer durch die Ringdüse 25 stromab von der Mündung 21 des Innenrohres 20 gebildeten Mündung 27 endet. Dadurch wird an dem Düsenaustritt des Düsenkopfes ein Wasserstrahl erhalten, der den über die Mündung 21 des Innenrohres 20 austretenden Luftstrahl im Gemisch mit Schleifstoff umhüllt, wobei der Austritt dieser beiden Strahlen aus dem Düsenkopf aus der Sichtverbindung mit dem Düsenhalter herausgelöst ist.

**Patentansprüche**

1. Düsenkopf für den Handgriff eines der Zahnreinigung dienenden Dentalgerätes, mit einem aus zwei Teilen (1, 2) gebildeten Düsenhalter, einem für eine Zuleitung von Schleifstoff im Gemisch mit Luft vorgesehenen Innenrohr (20), einem für eine Zuleitung von Wasser vorgesehenen Aussenrohr (24), das an dem einen Düsenhalterteil (1) befestigt ist und zu seiner ausserhalb desselben befindlichen Mündung (27) hin koaxial zu einer zugeordneten Teillänge des mit seiner Mündung (21) vorzugsweise etwas axial zurückversetzten Innenrohres (20) angeordnet ist, und mit zwei für den Anschluss von zwei Anschlussschläuchen an die beiden Rohre (20, 24) vorgesehenen achsparallelen Anschlussbohrungen (7, 9; 12), die in dem Düsenhalter stromauf von einem zwischen den beiden Rohren (20, 24) für den Wasseraustritt ausgebildeten Ringspalt (26) über eine rechtwinklig zu ihren Achsen verlaufende Querbohrung (10) miteinander verbunden sind, dadurch gekennzeichnet, dass die beiden Teile (1, 2) des Düsenhalters längs einer gemeinsamen Achse (23) ineinander zentriert sind, dass die Anschlussbohrung (9) an das Innenrohr (20) in dem einen Düsenhalterteil (1) und die Anschlussbohrung (12) an das Aussenrohr (24) in dem zweiten Düsenhalterteil (2) ausgebildet ist und dass die Querbohrung (10, 13) zwischen den beiden Teilen (1, 2) des Düsenhalters verläuft.

2. Düsenkopf nach Anspruch 1, dadurch gekennzeichnet, dass die Anschlussbohrung (9) an das Innenrohr (20) in einem Zentrierzapfen (3) des einen Düsenhalterteils (1) ausgebildet ist, auf dem der mit einem Anschlussgewinde (15) für den Handgriff versehene zweite Teil (2) des Düsenhalters für eine Abdichtung der Querbohrung (10) befestigt ist.

3. Düsenkopf nach Anspruch 1 oder 2, dadurch gekennzeichnet, dass der eine Düsenhalterteil (1) mit einer durchgehenden Axialbohrung (7) versehen ist, die an ihrem einen Ende zu einer für die Befestigung des Aussenrohres (24) vorgesehenen ersten Zentrierbohrung (8) im Durchmesser vergrössert und an ihrem anderen Ende als eine zweite Zentrierbohrung (9) für einen hohlen Anschlussstopfen (18) ausgebildet ist, an welchem das Innenrohr (20) befestigt und welcher zum Aufschieben des zugeordneten Anschlussschlauches ausgebildet ist.

4. Düsenkopf nach Anspruch 3, dadurch gekennzeichnet, dass eine sich axial zwischen den beiden Zentrierbohrungen (8, 9) stromauf von der Querbohrung (10) befindliche Teillänge (11) der Axialbohrung (7) des einen Düsenhalterteils (1) auf den Aussendurchmesser des Innenrohres (20) verkleinert ist.

5. Düsenkopf nach einem der Ansprüche 1 bis 4, dadurch gekennzeichnet, dass die Mündung (27) des Aussenrohres (24) durch eine an ihm befestigte Ringdüse (25) gebildet ist.

6. Düsenkopf nach Anspruch 5, dadurch gekennzeichnet, dass durch die Ringdüse (25) die Mündung (21) des Innenrohres (20) zentriert ist.

7. Düsenkopf nach Anspruch 5 oder 6, dadurch gekennzeichnet, dass durch die Ringdüse (25) ein Durchtrittsquerschnitt gleich oder kleiner als der Ringspalt (26) zwischen den beiden Rohren (20, 24) gebildet ist.

8. Düsenkopf nach einem der Ansprüche 1 bis 7, dadurch gekennzeichnet, dass die von dem Düsenhalter zu den Mündungen (21, 27) geführten Teillängen der beiden Rohre (20, 24) längs einer gemeinsamen Achse einen gekrümmten Verlauf aufweisen.

9. Düsenkopf nach Anspruch 8, dadurch gekennzeichnet, dass die Mittelachse (22) des Düsenaustritts und die Zentrierachse (23) der beiden Düsenhalterteile (1, 2) mit einem gemeinsamen Mittelpunktswinkel von etwa 107,5° ∓ 2,5° ausgebildet sind.

10. Düsenkopf nach einem der Ansprüche 1 bis 9, dadurch gekennzeichnet, dass die Anschlussbohrung (12) an das Aussenrohr (24) in dem zweiten Düsenhalterteil (2) als eine achsparallele Sacklochbohrung ausgebildet ist, in die ein hohler Anschlussstopfen (14) für den zugeordneten Anschlussschlauch mit einer bezüglich des Anschlussstopfens (18) an das Innenrohr (20) unterschiedlichen Aufschieblänge eingesetzt ist und die eine Anschlussverbindung (13) an die Querbohrung (10) des einen Düsenhalterteils (1) aufweist.

## Claims

1. A nozzle head for the hand piece of a dental device for cleaning teeth, comprising a nozzle holder having two members (1, 2) an inner tube (20) for supplying an abrasive material in mixture with air, and outer tube (24) for supplying water and fixed to the one member (1) of the nozzle holder, the outer tube being provided with an orifice (27) that is located outside of said one member and in the direction of which the outer tube extends with a partial length coaxially to a corresponding portion of said inner tube (20) having an orifice (21) which is preferably slightly retracted axially, and two axially parallel connecting bores (7, 9; 12) for interconnecting two flexible tubes with said two tubes (20, 24), said connecting bores being interconnected through a transverse bore (10) extending at a right angle to their axes and being provided in said nozzle holder upstream of a circular gap (26) which is formed inbetween said two tubes (20, 24) for the water exit, characterized in that the two members (1, 2) of the nozzle holder are centered with respect to each other along a common axis (23), that the connecting bore (9) to the inner tube (20) is formed in the one member (1) of the nozzle holder and the connecting bore (12) to the outer tube (24) is formed in its second member (2), and that the transverse bore (10, 13) extends between the two members (1, 2) of the nozzle holder.

2. A nozzle head according to claim 1, characterized in that the connecting bore (9) to the inner tube (20) is formed in a centering pin (3) of the one member (1) of the nozzle holder on which the second member (2) of the nozzle holder which is provided with a connecting thread (15) for the hand piece is fixed for sealing the transverse bore (10).

3. A nozzle head according to claim 1 or 2, characterized in that the one member (1) of the nozzle holder is provided with an axial through bore (7) which at its one end is provided with a first centering bore (8) of an enlarged diameter for the fixation of the outer tube (24) and which at its other end is formed as a second centering bore (9) for a hollow connecting plug (18) on which the inner tube (20) is fixed and which is formed for allowing its coordinated flexible tube to be slipped on.

4. A nozzle head according to claim 3, characterized in that a partial length (11) of the axial bore (7) of the one member (1) of the nozzle holder which extends upstream of the transverse bore (10) axially inbetween the two centering bores (8, 9) is reduced to the outer diameter of the inner tube (20).

5. A nozzle head according to any of the claims 1 to 4, characterized in that the orifice (27) of the outer tube (24) is formed by a circular nozzle (25) which is fixed to the outer tube.

6. A nozzle head according to claim 5, characterized in that the orifice (21) of the inner tube (20) is centered by the circular nozzle (25).

7. A nozzle head according to claim 5 or 6, characterized in that a cross-sectional passage equal to or smaller than the circular gap (26) inbetween the two tubes (20, 24) is formed by the circular nozzle (25).

8. A nozzle head according to any of the claims 1 to 7, characterized in that the partial lengths of the two tubes (20, 24) which extend from the nozzle holder to the orifices (21, 27) are provided along a common axis with a curved extension.

9. A nozzle head according to claim 8, characterized in that the center line (22) of the orifice exit and the centering axis (23) of the two members (1, 2) of the nozzle holder are formed with a common central angle of about 107,5° + or − 2,5°.

10. A nozzle head according to any of the claims 1 to 9, characterized in that the connecting bore (12) to the outer tube (24) is formed in the second member (2) of the nozzle holder as an axially parallel pocket hole bore into which a hollow connecting plug (14) for the coordinated flexible tube is inserted with a slip-on length different from the connecting plug (18) to the inner tube (20) and which is provided with an interconnection (13) to the transverse bore (10) of the one member (1) of the nozzle holder.

## Revendications

1. Tête de buse pour la poignée d'un appareil dentaire pour le nettoyage des dents, comprenant un porte-buse constitué par deux éléments (1, 2), un tube intérieur (20) pour l'alimentation en agent abrasif mélangé avec de l'air, un tube extérieur (24) pour l'alimentation en eau, qui est fixé à l'élément porteur de buse (1) et disposé, vers sa bouche (27) se trouvant à l'extérieur dudit élément, coaxialement par rapport à un tronçon associé d'un tube intérieur (20) dont la bouche (21) est préférablement axialement retraite par un petit écart, la tête comprenant deux perçages de raccord (7, 9; 12) dont les axes sont parallèles et qui sont pourvus pour le raccord de deux tubes de raccord auxdits deux tubes (20, 24), les deux perçages de raccord étant reliés l'un avec l'autre, par un perçage transversal (10) à un angle droit relatif à ses axes, en amont d'un passage annulaire (26) formé entre lesdits deux tubes (20, 24) pour la sortie de l'eau, caractérisé en ce que les deux éléments (1, 2) du porte-buse sont centrés l'un dans l'autre le long d'un axe commun (23), que le perçage de raccord (9) au tube intérieur (20) est pourvu dans le premier porte-buse (1) desdits deux éléments porteurs de buse pendant que le perçage de raccord (12) au tube extérieur (24) est pourvu dans le deuxième élément porteur de buse (2), et en ce que le perçage transversal (10, 13) s'étend entre les deux éléments (1, 2) du porte-buse.

2. Tête de buse selon la revendication 1, caractérisé en ce que le perçage de raccord (9) au tube intérieur (20) est pourvu dans un boulon de centrage (3) d'un des éléments porteurs de buse (1), l'élément auquel est fixé le deuxième élément (2) du porte-buse par un filetage de raccord (15) pour la poignée, afin d'étancher ledit perçage transversal (10).

3. Tête de buse selon la revendication 1 ou 2, caractérisé en ce que l'un des deux éléments porteurs de buse (1) est muni d'un perçage axial continu (7) dont le diamètre à l'un de ses extrémités est élargi vers un premier perçage de centrage (8) pourvu pour l'attache dudit tube extérieur (24), pendant que son autre extrémité est pourvue comme un deuxième perçage de centrage (9) pour un bouchon creux de raccord (18) auquel est attaché ledit tube intérieur (20) et qui est apte à poser le tuyau de raccord associé par emmanchement.

4. Tête de buse selon la revendication 3, caractérisé en ce qu'un tronçon (11) dudit perçage axial (7) de l'un des éléments porteurs de buse (1) se trouve en disposition axiale entre les deux perçages de centrage (8, 9) en amont dudit perçage transversal (10), et est réduit pour l'adaptation au diamètre extérieur du tube intérieur (20).

5. Tête de buse selon quelconque des revendications 1 à 4, caractérisé en ce que l'orifice de sortie (27) du tube extérieur (24) est constitué par un insufflateur annulaire (25) attaché audit tube.

6. Tête de buse selon la revendication 5, caractérisé en ce que ledit insufflateur annulaire (25) centre la bouche (21) dudit tube intérieur (20).

7. Tête de buse selon la revendication 5 ou 6, caractérisé en ce que l'insufflateur annulaire (25) forme une section transversale de passage qui est égale au ou plus réduite que le passage annulaire (26) entre les deux tubes (20, 24).

8. Tête de buse selon quenconque des revendications 1 à 7, caractérisé en ce que les tronçons des deux tubes (20, 24) qui passent du porte-buse jusqu'aux bouches (21, 27) sont courbés le long d'un axe commun.

9. Tête de buse selon la revendication 8, caractérisé en ce que la ligne centrale (22) de l'orifice de sortie et l'axe de centrage (23) des deux éléments porteurs de buse (1, 2) forment un angle commun au centre de 107,5° ∓ 2,5° environ.

10. Tête de buse selon quelconque des revendications 1 à 9, caractérisé en ce que le perçage de raccord (12) au tube extérieur (24) dans le deuxième élément porteur de buse (2) a la configuration d'un trou borgne parallèle à l'axe, dans lequel trou est inséré un bouchon creux de raccord (14) pour le tuyau de raccord associé par une distance d'emmanchement variable par rapport à bouchon de raccord (18) au tube intérieur (20), ledit trou borgne étant muni d'un perçage de raccord (13) audit perçage transversal (10) du premier élément porteur de buse (1).

23 18 9 19 3 6 14 15 11 13 12 2 10 16 17 4 5 7 1 8 20 26 24 22 25 21 27

107,5° ± 2,5°